# EUROPEAN PATENT SPECIFICATION

(11) **EP 4 419 799 B1**
(45) Date of publication and mention of the grant of the patent: **11.12.2024**
(21) Application number: 23705072.9
(22) Date of filing: 03.02.2023
(51) Int. Cl.: F04F 13/00, F04B 53/16, F04F 99/00

(54) **DISTRIBUTION MANIFOLD**
VERTEILERVERTEILER
COLLECTEUR DE DISTRIBUTION

(30) Priority: 16.02.2022 GB 202202050
(43) Date of publication of application: 28.08.2024
(73) Proprietor: Weir Minerals Netherlands B.V., 5928 PH Venlo (NL)
(72) Inventor: STROEKEN, Johannes, 6043 JS Roermond (NL); UMMENTHUN, Frank, 5926 VH Venlo (NL)
(74) Representative: MacLeod, Roderick William
(86) International application number: PCT/IB2023/050989
(87) International publication number: WO 2023/156873

(56) References cited:
- WO-A1-2016/178956
- US-A1- 2005 211 802
- US-A1- 2005 276 708
- US-A1- 2017 227 002
- US-B2- 9 441 776

## Description

### FIELD OF INVENTION

This invention relates to a distribution manifold for use in a pressure exchange chamber ("PEC") pumping systems. More particularly, it relates to a method of operating a PEC pumping system for use in the mining and minerals processing industry, and particularly for use in a hydraulic ore hoisting system (HOHS), particularly for seabed mining activities or underground mining activities.

### BACKGROUND OF THE INVENTION

One arrangement for pumping medium, particularly a medium which contains a mixture of liquid and solid particles, includes making use of one or more PECs.

A PEC pumping system typically includes an elongate pipe having a medium or pumped fluid valve arrangement at one end and a driving fluid valve arrangement at the other end. The medium valve arrangement includes a medium inlet valve whereby medium to be pumped can be admitted into the PEC and a medium outlet valve whereby pumped medium can be discharged from the PEC along a discharge pipe, riser, or the like. Similarly, the driving fluid valve arrangement includes a driving fluid inlet valve through which a high-pressure driving fluid can be admitted into the PEC and a driving fluid outlet valve whereby driving fluid can be discharged from the PEC. Different configurations and layouts of elongate pipes are possible.

In use, medium to be pumped is typically fed to the medium inlet valve at a relatively low pressure by means of a medium delivery pump, usually a centrifugal pump. With the medium inlet valve open and the driving fluid outlet valve open medium enters the PEC and displaces driving fluid out of the PEC through the driving fluid outlet valve.

When the PEC has been charged with medium, i.e., a desired quantity of medium has entered the PEC, the medium inlet valve and driving fluid outlet valve are closed. The medium outlet valve and the driving fluid inlet valve are opened such that high pressure driving fluid enters the PEC and displaces the medium out of the chamber through the medium outlet valve. Naturally, the exact sequence and timing associated with the opening and closing of the valves may vary to optimise operation of the PEC pumping system.

Once the medium has been discharged from the PEC the medium outlet valve and driving fluid inlet valve close and the medium inlet valve and the driving fluid outlet valve open to charge the PEC with medium in the manner described above.

As mentioned above, the medium to be pumped is typically fed to the PEC by means of a centrifugal pump since this type of pump is able to handle a medium containing relatively large particles at a flowrate suitable for filling the PEC within a typical cycle time used by the PEC system.

To permit continuous pumping, use is made of a plurality of PECs (typically three or more) arranged in parallel. By controlling the operation of the valves, the timing of the filling or charging of the PECs with medium and the discharge of the medium therefrom can be staggered to provide a substantially continuous flow of pumped medium. To avoid clogging in the PEC, the flow velocity should be maintained, i.e., by ensuring that the switch-over time from one PEC to the next is as short as possible.

To be able to operate with a medium containing solid particles, the medium inlet valves are typically cone valves which have a downwardly open inlet. The medium inlet valves are connected in flow communication with the centrifugal pump by means of feed lines. More particularly, each feed line has a downstream end which is connected to the inlet of the associated medium inlet valve and an upstream end which is connected in flow communication with the centrifugal pump.

One problem is that when pumping medium including coarse solid particles, these coarse solid particles settle when the flow is stopped causing clogging or a blockage in the feed line, which can potentially prevent proper operation of the medium inlet valve (since the valve cannot close fully when coarse solid particles are on the valve seat) necessitating a shutdown of the pumping system. A manifold is known from US2005/276708. However this manifold is not provided with angular pipes around a central axis, but intended to be arranged in a horizontal direction.

It is an object of this invention to provide means to at least ameliorate this problem or provide a useful alternative.

### SUMMARY OF THE INVENTION

The invention is defined by the appended claims. This summary is provided to introduce a selection of concepts that are further described in the detailed description below. This summary is not intended to identify indispensable features of the claimed subject matter, nor is it intended for use as an aid in limiting the scope of the claimed subject matter. Features of one aspect described below may be combined with features of another aspect.

In this application ordinal numbers (first, second, third, etc.) are assigned arbitrarily herein, and are used to differentiate between parts, and do not indicate a particular order, sequence, or importance.

According to a first aspect of the invention there is provided a distribution manifold for a pressure exchange chamber (PEC) pumping system having a plurality of PEGs arranged in parallel, which includes: a hollow manifold body defining a distribution chamber and positioned in an upright orientation; an inlet leading into the body for receiving medium to be pumped, comprising solid particles transported in a liquid; a plurality of spaced apart outlets opening operatively upwardly out of the manifold body; and a plurality of pipes, each pipe extending upwards from a respective outlet to an associated medium inlet valve of one of the pressure exchange chambers, the medium inlet valves being in an upright orientation, whereby on closure of a medium inlet valve, solid particles settle down the associated pipe under gravity and away from the medium inlet valve to prevent blockage thereof.

The pipes may have any cross-sectional shape.

The medium inlet valves may be substantially vertical.

The outlets may be vertically offset (spaced apart vertically) from each other; alternatively, the hollow manifold body may comprise a plurality of outlets circumferentially spaced at approximately the same altitude (for example, in the same generally horizonal plane).

The body optionally includes a base and a top which is secured to the base to define the distribution chamber, the inlet extending through the base and the outlets extending through the top.

Each of the pipes may comprise an upstream end which is connected to one of the outlets and a downstream end which is connected to an associated medium inlet valve, each pipe being inclined operatively upwardly away from the body such that, in use, the upstream end is positioned at a level which is lower than the downstream end.

Each pipe may have a coupling formation at its downstream end whereby it is connectable to an associated medium inlet valve.

The pipes preferably are equiangularly spaced around a central axis of the manifold and each pipe is preferably inclined at an angle of inclination of approximately 75 degrees or less relative to the central axis of the manifold.

In a preferred embodiment of the invention the angle of inclination is between 30 degrees and 60 degrees, advantageously between 40 degrees and 50 degrees, such as approximately 45 degrees.

The distribution manifold may include an inlet pipe having a downstream end which is connected to the base and an upstream end which is connectable to the medium supply to connect the inlet of the distribution manifold in flow communication with the medium supply. A connecting formation may be provided at the upstream end of the inlet pipe for connection with a feed line in flow communication with a discharge side of a feeder or delivery pump.

The medium may comprise a slurry. Slurries typically have a solids concentration of at least 5% by weight, but sometimes significantly more (typically at least 35% by weight) because pumping efficiency increases with increasing solids concentration, provided there is no clogging of the pipes due to the solids content, because the aim is to transfer as much solids as possible.

The hollow manifold body may further define a sump into which solid particles from each pipe may flow under gravity, whereby these solid particles may be entrained with new medium being pumped through the hollow manifold body and through another pipe connected to an open medium inlet valve. The sump may comprise one or more sloping sides.

The distribution manifold may form part of a common slurry input device. The common slurry input device may further comprise a plurality of medium inlet valves, each medium inlet valve being associated with a respective pressure exchange chamber.

According to a second aspect of the invention there is provided a common medium input device comprising a distribution manifold according to the first aspect, and a plurality of medium input valves; wherein each of the pipes has an upstream end which is connected to one of the outlets and a downstream end which is connectable to an associated medium inlet valve, each pipe being inclined operatively upwardly away from the body such that, in use, the upstream end is positioned at a level which is lower than the downstream end.

According to a third aspect of the invention there is provided a method of operating a PEC pumping system having at least one PEC which method includes feeding medium comprising solid particles transported in a liquid to an upright medium inlet valve of the PEC along a flow path through a manifold body and a pipe having an upstream end connected to the manifold body and a downstream end which is connected to the medium inlet valve and positioned higher than the upstream end, such that on closure of a medium inlet valve, solid particles settle down the associated pipe under gravity and away from the medium inlet valve to prevent blockage thereof.

When the PEC pumping system has a plurality of PECs, the method may include feeding medium to be pumped from a distribution chamber to a medium inlet valve of the or each PEC along an inclined flow path such that solids settling in a flow path are fed under gravity towards the distribution chamber.

The method may include using a delivery pump to feed medium to be pumped into the distribution chamber and from the distribution chamber along the associated flow path to the or each medium inlet valve which is open. The method may also include feeding back into the distribution chamber at least some of the solids which settle in a flow path connected to a medium inlet valve which is closed, thereby ensuring that the settled solids are entrained in medium flowing through the distribution chamber and along a flow path to an open medium inlet valve.

It will be appreciated that medium will be pumped to the distribution chamber from a medium delivery pump on a continuous basis. Further, by virtue of the staggered operation of a plurality of PECs, at any given time at least one medium inlet valve will be open to permit charging of the associated PEC with medium to be pumped. This arrangement permits continuous flow of medium through the distribution chamber. Solids which settle in a feed line for a PEC that has been filled flow downwardly along the feed line from the associated medium inlet valve that is, or will be, closed, and at least some of the solids (typically the heavier or larger solids) flow back into the distribution chamber where they are entrained in the medium flowing through the distribution chamber and are fed along the feed line connected to the open medium inlet valve.

According to a fourth aspect of the invention, there is provided a PEC pumping system which comprises: (i) at least one PEC comprising a pipe and a medium valve arrangement in flow communication with the pipe; (ii) a feed arrangement for feeding medium comprising solid particles transported in a liquid to the PEC; and (iii) a common medium input device according to the second aspect coupled to both the at least one PEC and the feed arrangement.

In a preferred embodiment of the invention, the PEC pumping system includes a plurality of PECs arranged in parallel, a distribution manifold defining a distribution chamber which has an inlet connected in flow communication with a source of medium to be pumped, and a plurality of spaced apart outlets, each connected by a feed line to a respective medium inlet valve, each of the feed lines being inclined such that solids settling in a feed line are fed under gravity towards the distribution chamber. In other words, solids which settle in a feed line will not be deposited in the feed line but will move downwardly away from the medium inlet valve to which the feed line is connected and into the distribution chamber, thereby reducing the risk of a blockage in the feed line or that the solids may interfere with the operation of the valve.

To ensure that any solids which settle in a feed line do not clog the feed line, each feed line may have an angle of inclination relative to the vertical of approximately 75 degrees or less, or approximately 70 degrees or less. In a preferred embodiment of the invention, the angle of inclination is between 30 and 60 degrees.

The distribution manifold may be a distribution manifold of the type described above.

The PEC pumping system may further comprise a driving fluid valve arrangement in flow communication with the pipe at a position longitudinally spaced from the medium valve arrangement.

The components of the PEC pumping system may be transported in a disassembled or knocked-down kit form for assembly at site.

Hence, according to a fifth aspect of the invention, there is provided a PEC pumping system kit which includes: a plurality of PECs, each comprising a pipe and an associated medium valve arrangement, each medium valve arrangement including a medium inlet valve whereby medium to be pumped can be admitted into the pipe and a medium outlet valve whereby pumped medium can be discharged from the pipe; and a distribution manifold as described above whereby the medium inlet valves are connectable in flow communication with a medium supply.

The PEC pumping system kit may further comprise a plurality of driving fluid valve arrangements which are connected or connectable to the pipes at a position longitudinally spaced from the medium valve arrangements, each driving fluid valve arrangement including a driving fluid inlet valve through which a high-pressure driving fluid can be admitted into the pipe and a driving fluid outlet valve whereby driving fluid can be discharged from the pipe.

According to a sixth aspect of the invention, there is provided a method of modifying a PEC pumping system which includes a plurality of PECs arranged in parallel, each PEC including a medium inlet valve, and a feed arrangement for feeding medium to be pumped to the medium inlet valves, the feed arrangement including a feeder pump having a suction side and a discharge side, which method includes providing a distribution manifold of the type described above and connecting the manifold in-line between the feeder pump and the medium inlet valves.

According to a seventhth aspect of the invention there is provided a method of reducing clogging in a PEC pumping system, the method comprising: receiving pumped medium through a common medium entry inlet; upwardly directing pumped medium from the common medium entry inlet to an open medium inlet valve; downwardly directing stationary medium from beneath a closed medium inlet valve; and mixing the downwardly directed medium with the upwardly directed medium in a distribution chamber to reduce clogging caused by the stationary medium.

The method may comprise the further step of upwardly directing mixed downwardly and upwardly directed medium to the open medium inlet valve.

According to an eighth aspect of the invention there is provided a distribution manifold for a pressure exchange chamber pumping system having a plurality of pressure exchange chambers arranged in parallel, which includes: a hollow manifold body defining a distribution chamber; an inlet leading into the body and connectable in flow communication with a medium supply providing a slurry comprising solid particles transported in a liquid; a plurality of spaced apart outlets opening operatively upwardly out of the manifold body, each outlet being connectable in flow communication with a medium inlet valve of one of the pressure exchange chambers; and a plurality of lengths of pipe, each of which has an upstream end which is connected to the manifold body in flow communication with one of the outlets and a downstream end which is connectable to an associated medium inlet valve of one of the pressure exchange chambers, the medium inlet valve being in an upright orientation, and each length of pipe being inclined operatively upwardly away from the manifold body such that, in use, the upstream end is positioned at a level which is lower than the downstream end, whereby solid particles that settle are fed under gravity away from the medium inlet valve to prevent blockage thereof.

### BRIEF DESCRIPTION OF THE DRAWINGS

These and other aspects of the invention will now be described, by way of example, with reference to the accompanying diagrammatic drawings, in which:
Figure 1 shows a schematic view of a PEC pumping system in accordance with the prior art;
Figure 2 shows a three-dimensional view of part of a PEC pumping system (a slurry end of a three chamber PEC pumping system) in accordance with an embodiment of the invention;
Figure 3 shows, on an enlarged scale, part of the PEC pumping system of Figure 2, certain components being omitted for ease of illustration;
Figure 4 shows a side view of the part of the PEC pumping system shown in Figure 3;
Figure 5 shows a plan view of the part of the PEC pumping system of Figure 3;
Figure 6 shows a bottom view of the part of the PEC pumping system of Figure 3;
Figure 7 shows a sectional view of a distribution manifold forming part of the PEC pumping system of Figure 2;
Figure 8 shows the distribution manifold of Figure 7 and illustrates the flow of medium through the manifold during a first operative condition of the PEC pumping system of Figure 2;
Figure 9 shows the distribution manifold of Figure 7 and illustrates the flow of medium through the manifold during a second operative condition of the PEC pumping system of Figure 2;
Figure 10 shows an alternative distribution manifold; and
Figure 11 shows a sectional view of an alkternative distribution manifold that could be used in a PEC pumping system simliar to the PEC pumping system of Figure 2.

### DETAILED DESCRIPTION OF EMBODIMENTS

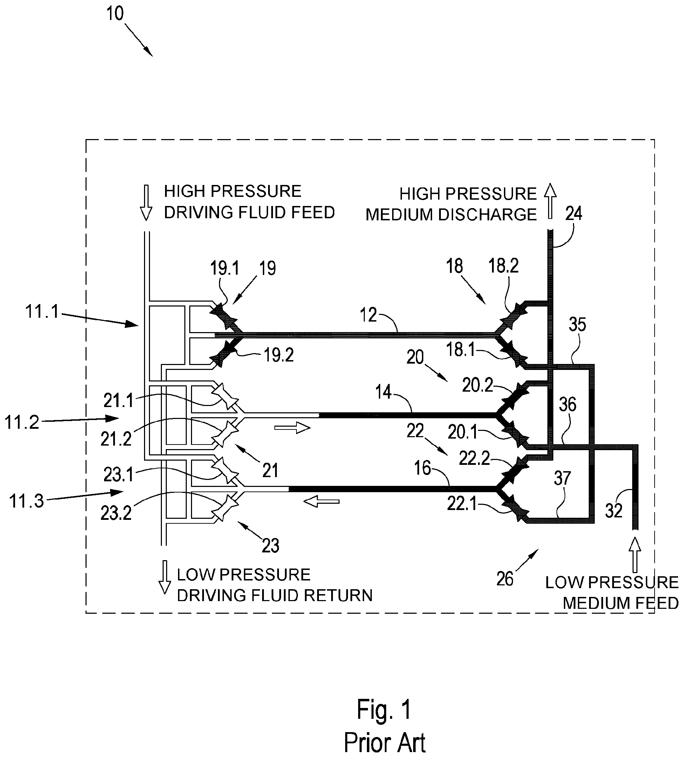

In Figure 1 of the drawings, reference numeral 10 refers generally to part of a pressure exchange chamber (PEC) pumping system in accordance with the prior art.

The PEC pumping system 10 includes three PEGs 11.1, 11.2, and 11.3 defined by lengths of pipe 12, 14, 16 (which act as pump chambers) and associated valves. The associated valves include three medium or pumped fluid valve arrangements 18, 20, 22, which are connected respectively to the pipes 12, 14, 16 at a medium entry ends thereof. The associated valves also include three driving fluid valve arrangements 19, 21, 23, which are connected, respectively, to the lengths of pipe 12, 14, 16 at the driving fluid entry ends thereof, i.e., longitudinally spaced from the medium valve arrangements 18, 20, 22.

Each medium valve arrangement 18, 20, 22 includes a medium inlet valve 18.1, 20.1, 22.1 whereby medium to be pumped can be admitted into the associated PEC 11.1, 11.2, 11.3 and a medium outlet valve 18.2, 20.2, 22.2 whereby pumped medium can be discharged from the PEC 11.1, 11.2, 11.3 along a discharge pipe 24 (which may be a riser). Similarly, each driving fluid valve arrangement 19, 21, 23 includes an inlet valve 19.1, 21.1, 23.1 through which a high-pressure driving fluid can be admitted into the associated PEC 11.1, 11.2, 11.3 and an outlet valve 19.2, 21.2, 23.2 whereby driving fluid can be discharged from the associated PEC 11.1, 11.2, 11.3.

The PEC pumping system 10 further includes a feed arrangement, part of which is generally indicated by reference numeral 26, configured to feed medium to be pumped to the medium inlet valves 18.1, 20.1, 22.1 as described in more detail herebelow. The feed arrangement 26 includes a feeder or delivery pump (not shown) having a suction side and a discharge side, although other pump arrangements are possible. The feeder pump is typically a centrifugal pump which can pump a medium which includes fairly large solid particles, e.g., particle sizes between 2mm and 60mm. with some particles up to approximately 100mm. The feed arrangement 26 further includes a common feed pipe 32 which is connected to a discharge side of the feeder pump and three feed lines 35, 36, 37 each of which has an upstream end connected to the common feed pipe 32 and a downstream end. The downstream ends of the feed lines 35, 36, 37 are connected , respectively, to the medium inlet valves 18.1, 20.1, 22.1. Hence, in use medium to be pumped is pumped from the centrifugal pump through the pipe 32 and the feed lines 35, 36, 37 to the medium inlet valves 18.1, 20.1, 22.1.

In use, once the volume in the relevant pipe 12, 14, 16 is decompressed, the medium inlet valve 18.1, 20.1, 22,1 is opened and the corresponding driving fluid outlet valve 19.2, 21.2, 23.2 is opened, so that medium enters the associated pipe 12, 14, 16 and displaces the driving fluid out of that pipe 12, 14, 16 through the associated driving fluid outlet valve 19.2, 21.2, 23.2. When a desired quantity of medium has entered a particular PEC pipe 12, 14, or 16, the associated medium inlet valve 18.1, 20.1, or 22,1 and the associated driving fluid outlet valve 19.2, 21.2, or 23.2 are closed. The volume in the relevant pipe 12, 14, 16 is pressurised (by a compression step) and then the medium outlet valve 18.2, 20.2, or 22.2 and the associated driving fluid inlet valve 19.1, 21.1, or 23.1 are opened such that high-pressure driving fluid enters that PEC pipe 12, 14, or 16 and displaces the medium out of the pipe 12, 14, or 16 through the medium outlet valve 18.2, 20.2, or 22.2 and into the discharge pipe 24.

Once the medium has been discharged from the pipe 12, 14, or 16, the associated medium outlet valve and driving fluid inlet valve close, the pipe 12, 14, or 16 is decompressed, and the medium inlet valve and driving fluid outlet valve open, once again, to charge the pipe 12, 14, or 16 with medium in the manner described above.

To permit more or less continuous pumping, the operation of the valves of the different PEGs 11.1, 11.2, 11.3 is staggered such that the filling of the PECs 11.1, 11.2, 11.3 with medium and the discharge of medium occurs in a more or less continuous basis.

It will be appreciated that when the medium inlet valve 18.1, 20.1, 22.1 of a particular PEC 11.1, 11.2, 11.3 is opened, medium will be flowing through the associated feed line 35, 36, 37 and solid particles in the medium will be entrained or suspended in the liquid (which is typically water). However, when one of the medium inlet valve closes, the medium in the associated feed line 35, 36, 37 will be stationary until the medium inlet valve once again opens. Whilst the medium is stationary, the solids in the medium settle in the feed line. This can lead to a blockage in (clogging of) the feed line 35, 36, 37. In addition, with the accumulation of sufficient solids in the feed line, the proper operation of the medium inlet valve is not possible, necessitating a shutdown of the PEC pumping system 10 to effect suitable repairs (e.g., unclogging) to restore the medium inlet valve to full operation.

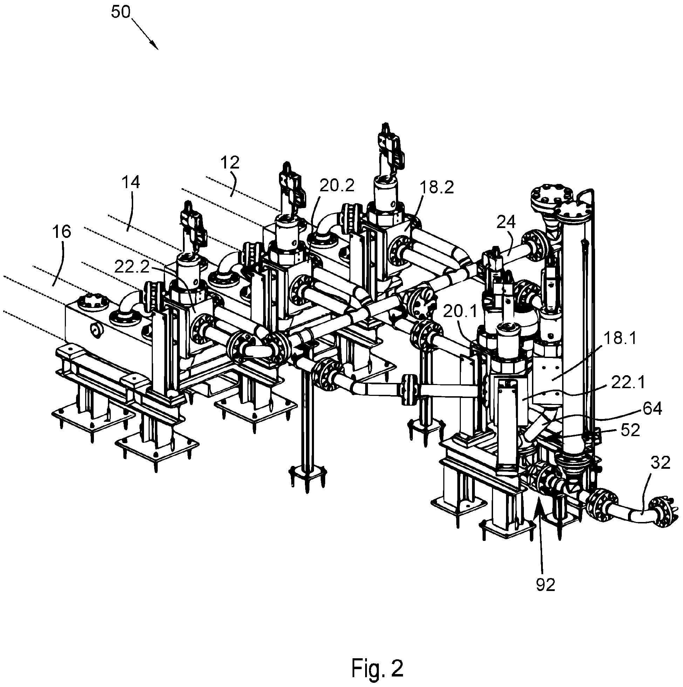

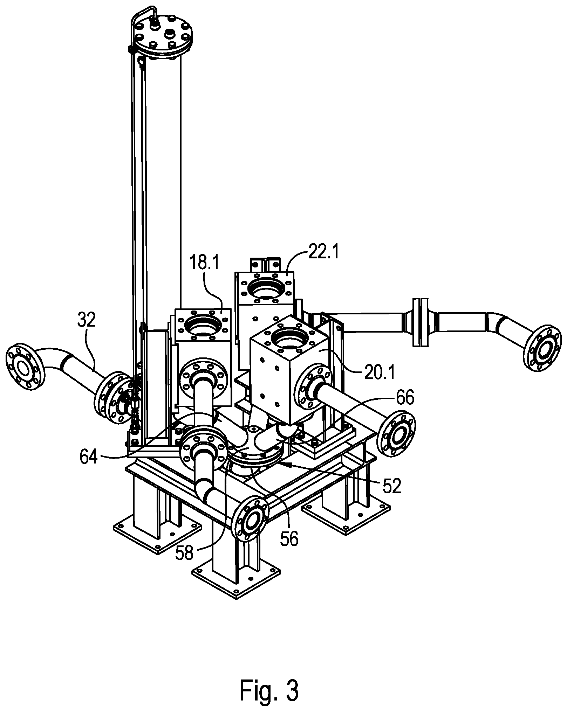

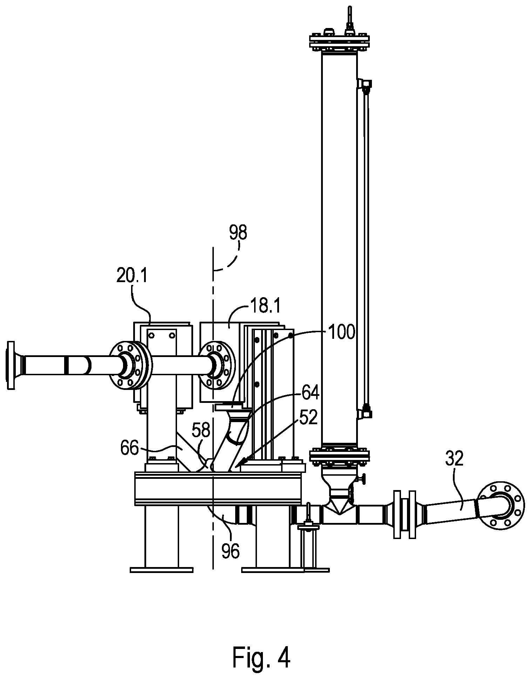

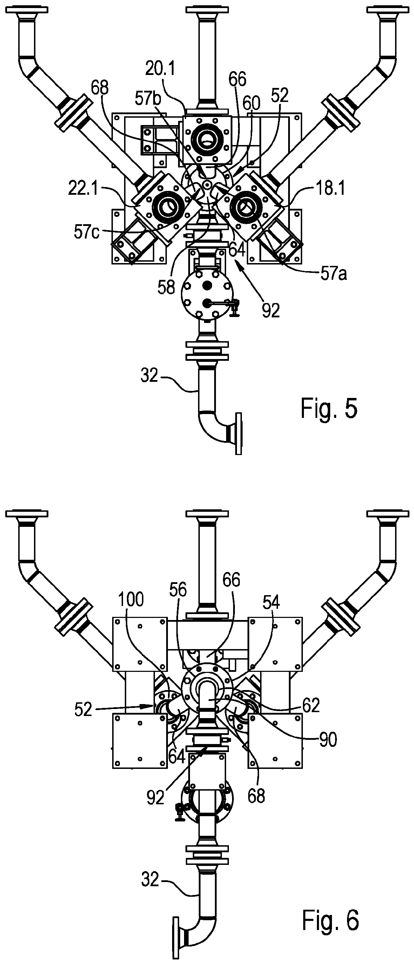

Reference is now made to Figures 2 to 9 of the drawings, in which reference numeral 50 refers generally to an embodiment of a PEC pumping system in accordance with the invention. Unless otherwise indicated, like reference numerals used above are used to designate similar parts.

The PEC pumping system 50 of the present invention makes use of a distribution manifold generally indicated by reference numeral 52. The distribution manifold 52 replaces the feed lines 35, 36, 37 in the prior art PEC system 10 and provides an interface between the common feed pipe 32 and the medium inlet valves 18.1, 20.1, 22.1.

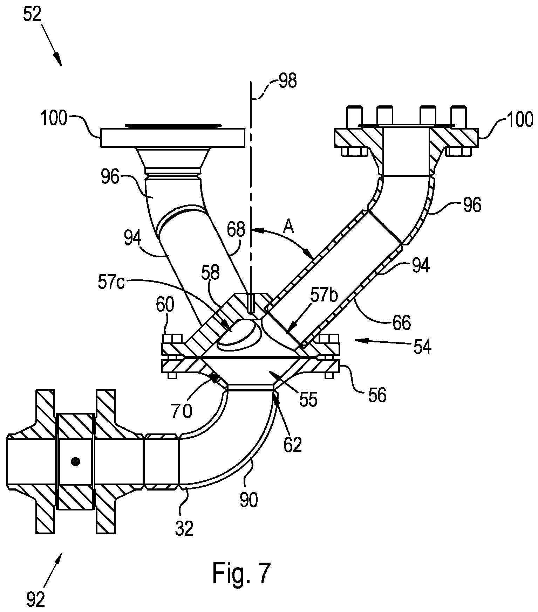

As can best be seen in Figures 7 to 9 of the drawings, the distribution manifold 52 includes a hollow body 54 defining a distribution chamber 55.

The body 54 includes a domed or frusto-conical base 56 and a domed or frusto-conical top 58 which is secured to the base by circumferentially spaced bolts 60 extending through complementary annular flanges.

The distribution manifold 52 includes an inlet 62 which extends through the base 56 and an inlet pipe 90 having a downstream end which is connected, e.g., by welding, to the base 56 and an upstream end which is connected to the pipe 32 by means of a coupling 92 thereby connecting the inlet 62 in flow communication with the discharge side of the feeder pump.

The medium inlet valves 18.1, 20.1, 22.1 are in the form of cone valves which have a downwardly facing inlet and are positioned in a spaced apart configuration above the distribution manifold 52. Three equiangularly spaced apart upwardly open outlets 57a, 57b, 57c extend through the top 58 and are connected to the inlets of the medium inlet valves 18.1, 20.1, 22.1 by feed lines 64, 66, 68, respectively. Each feed line 64, 66, 68 comprises a length of pipe having a straight lower section 94 and a curved upper section 96. The lower ends of the lower sections 94 are secured to the top 58, e.g., by welding, such that they extend upwardly outwardly away from the top 58 at an angle of inclination A relative to a vertical center line 98 through a centre of the distribution manifold 52. The upper sections 96 curve upwardly and a flange 100 is connected to the upper end of the upper section whereby the feed line 64, 66, 68 is connected to the associated medium inlet valve 18.1, 20.1, 22.1.

Important to note is that each of the feed lines 64, 66, 68 is inclined downwardly for its entire length from its downstream end which is in flow communication with the inlet of the associated medium inlet valve 18.1, 20.1, 22.1 to its upstream end connected in flow communication with the distribution chamber 55 defined in the body 54 of the distribution manifold 52.

In use, the PEC pumping system 50 functions in substantially the identical manner to the PEC pumping system 10 described above. However, as explained in more detail below, when a medium inlet valve is closed and the medium contained in the associated feed line 64, 66, 68 is stationary, solids contained in the feed line will settle and flow downwardly, under the influence of gravity, along the feed line towards the distribution chamber 55 of the distribution manifold 52. The lower part of the distribution chamber 55 defines a sump 70 (best seen in Figure 7) having sloping sides and into which the solids settle from each of the feed lines 64, 66, 68 when their respective medium inlet valves are closed. Solids which flow back into the distribution chamber 55, and which collect in the sump 70, will be entrained in the medium passing through the distribution chamber 55 and be fed along the feed line connected to whichever medium inlet valve which is open.

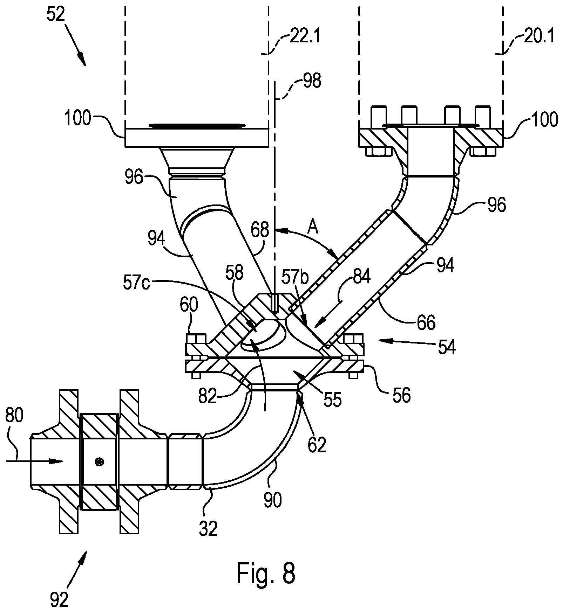

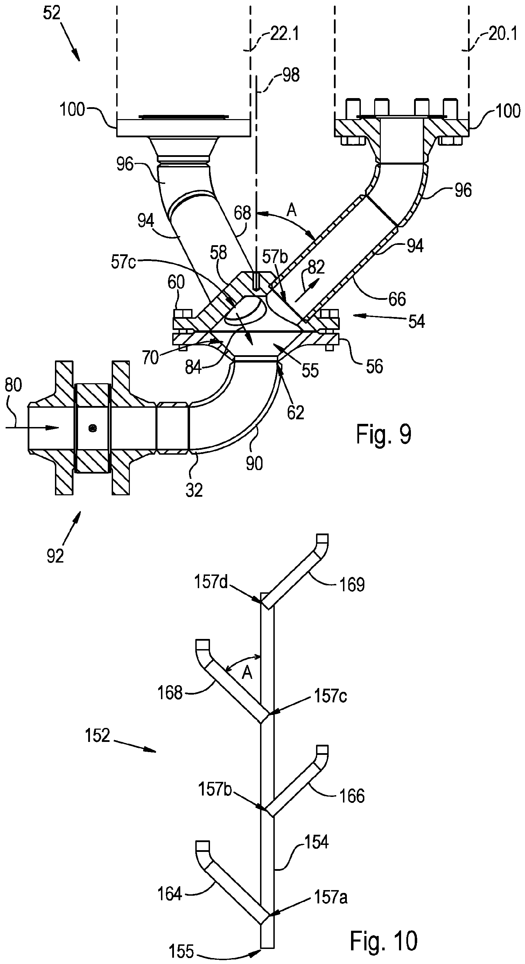

With reference to Figure 8 of the drawings, the flow of medium through the distribution manifold 52 is illustrated in a first operative condition of the PEC pumping system 50 in which the medium inlet valve 22.1 is open and the medium inlet valve 20.1 is closed. In this condition, medium is fed along the pipe 32 in the direction of arrow 80. The medium passes through the inlet pipe 90 and enters the distribution chamber 55 through the inlet 62. The medium exits the chamber 55 through the outlet 57c and flows along the feed line 68 connected to the medium inlet valve 22.1 as indicated by arrow 82 (which indicates the slurry feed flow direction in both Figures 8 and 9). Since the medium inlet valve 20.1 is closed the medium in the feed line 66 is stationary. Solid particles which settle in the feed line 66 flow downwardly under the influence of gravity, as illustrated by arrow 84 (which indicates the solids settling direction in both Figures 8 and 9), back through the outlet 57b into the distribution chamber 55 where they are entrained in the medium flowing through the chamber and fed to the open medium inlet valve 22.1.

With reference to Figure 9 of the drawings, the flow of medium through the distribution manifold 52 is illustrated in a second operative condition in which the medium inlet valve 22.1 is closed and the medium inlet valve 20.1 is open. In this condition, medium is fed along the pipe 32 in the direction of arrow 80. The medium passes through the inlet pipe 90 and enters the distribution chamber 55 through the inlet 62. The medium exits the chamber 55 through the outlet 57b and flows along the feed line 66 connected to the medium inlet valve 20.1 as indicated by arrow 82. Since the medium inlet valve 22.1 is closed the medium in the feed line 68 is stationary. Solid particles which settle in the feed line 68 flow downwardly under the influence of gravity, as illustrated by arrow 84, back through the outlet 57c into the distribution chamber 55 where they are entrained in the medium flowing through the chamber and fed to the open medium inlet valve 20.1.

The operation of the system has been described above by way of illustration without reference to the medium inlet valve 18.1 and the associated feed line 64. It will be appreciated however, that when the medium inlet valve 18.1 is open, medium will flow through the outlet 57a along the feed line 64 into medium inlet valve 18.1 and when the medium inlet valve 18.1 is closed solid particles settling in the feed line 64 will flow back through the outlet 57a into the chamber 55 to be entrained in the medium flowing through the chamber 55 in the manner described above. To ensure continuous pumping, at all times at least one of the medium inlet valves 18.1, 20.1, 22.1 is open. This in turn ensures that there is continuous flow of medium through the common feed pipe 32, inlet pipe 90 and chamber 55. In some systems, a fourth PEC may be included for redundancy, for example in case of failure of one of the other three PEGs 11.1, 11.2, 11.3.

The angle of inclination A of the feed lines 64, 66, 68 is selected to ensure that solids settling in the feed line do in fact flow back towards the distribution chamber 55. To this end, the angle of inclination A is between 0°, i.e., vertical, and approximately 75° for some types of slurry (e.g., where the particles are spherical and roll), although for many embodiments the angle will be between approximately 25° and 60°, such as approximately 40° to 50°.

It will be appreciated that potentially not all the solids contained in a feed line 64, 66, 68 will flow back into the chamber 55 before the associated medium inlet valve 18.1, 20.1, 22.1 opens for the following charging cycle. However, the movement of the solids in the feed lines will reduce the risk of a build-up which could cause a blockage (clogging). In addition, the settling solids will move away from the associated medium inlet valve 18.1, 20.1, 22.1 thereby reducing the risk that they may interfere with the proper functioning of the associated medium inlet valve 18.1, 20.1, 22.1.

In this way, the risk of a medium build-up which could block the feed line or inhibit operation of the medium inlet valve is greatly reduced.

An additional advantage of the invention is that the concentration of solids in the medium can be increased substantially from the current level, for example, up to approximately 25%. This in turn allows more solids to be pumped for a given power input or alternatively for a smaller system to be used to pump the same volume of solids as may be pumped with the prior art.

In other embodiments, the outlets 57a,b,c may not be equally (or equiangularly) spaced around a central axis 98 of the manifold 52. For example, an alternative distribution manifold 152 is shown in Figure 10. This distribution manifold 152 may be used in embodiments where the PECs 11.1, 11.2, 11.3 are located at different heights or altitudes). The distribution manifold 152 comprises four outlet 157a,b,c,d each being coupled to a respective feed line 164, 166, 168 and 169; and each of the outlets 157a,b,c,d being vertically spaced (or offset) from its adjacent outlet. The distribution manifold 152 comprises an elongate body 154 extending generally vertically and defining a circular or cylindrical distribution chamber 155 therein.

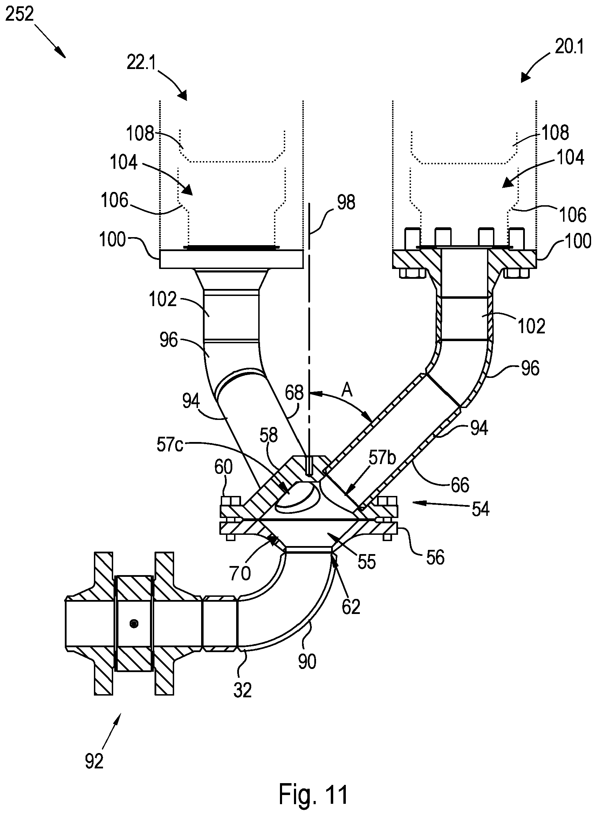

In other embodiments, as illustrated in Figure 11 of the drawings, a distribution manifold 252 may include a vertical spacing pipe 102 between the upper section 96 and the flange 100 associated with each outlet 57a,b,c. The medium inlet valves 18.1, 20.1, 22.1 each define a chamber 104 in which a valve seat 106 is mounted. A valve body 108 moves within the chamber 104 towards and away from the valve seat 106 to close and open the valve, respectively. The vertical spacing pipe 102 is provided to assist with flow of solid particles downwardly under the influence of gravity, away from that part of the chamber 104 beneath the valve body 108 and down the vertical spacing pipe 102. The volume of the upper section 96 and the vertical spacing pipe 102 combined equals or is greater than the volume of the chamber 104 of the medium input valve 18.1. In other embodiments, vertical spacing pipe 102 may be incorporated into the upper section 96 to provided an upper section having an extended vertical portion immediately below the flange 100.

In other embodiments an input vertical spacing pipe may be provided between the inlet pipe 90 and the base 56.

It will be appreciated that a PEC pumping system could be constructed in the first instance accordance with the invention. The components of the PEC pumping system could be transported in knocked-down or kit form for assembly on site. Alternatively, a PEC pumping system in accordance with the prior art (such as shown in Fig. 1) could be modified by installing a distribution manifold and inclined feed lines as described above.

### LIST OF REFERENCE NUMERALS

Pressure exchange chamber pumping system 10, 50
Pressure exchange chambers (PECs) 11.1, 11.2, 11.3
PEC Pipes (pump chambers) 12, 14, 16
Medium valve arrangement 18, 20, 22
Medium inlet valve 18.1, 20.1, 22.1
Medium outlet valve 18.2, 20.2, 22.2
Driving fluid valve arrangements 19,21,23
Driving fluid inlet valve 19.1, 21.1, 23.1
Driving fluid outlet valve 19.2, 21.2, 23.2
Discharge pipe 24
Feed arrangement 26
Common feed pipe 32
Feed line 35, 36, 37
Pressure exchange chamber pumping system 50
Distribution manifold 52, 152, 252
Body 54, 154
Distribution chamber 55, 155
Base 56
Outlets 57a,b,c, 157a,b,c,d
Top 58
Bolts 60
Inlet 62
Feed line (pipe) 64, 66, 68, 164, 166, 168, 169
Sump 70
Arrow 80
Arrow 82
Arrow 84
Inlet pipe 90
Coupling 92
Lower section 94
Upper section 96
Vertical center line 98
Flange 100
Chamber 104
Valve seat 106
Valve body 108
Angle of inclination A

## Claims

1. A distribution manifold (52, 152, 252) for a pressure exchange chamber pumping system (10, 50) having a plurality of pressure exchange chambers (11.1, 11.2, 11.3) arranged in parallel, which includes:
a hollow manifold body (54, 154) defining a distribution chamber (55, 155) and positioned in an upright orientation and defining a central, upright axis (98);
an inlet (62) leading into the body (54, 154) for receiving medium to be pumped, comprising solid particles transported in a liquid;
a plurality of spaced apart outlets (57, 157) opening operatively upwardly out of the manifold body (54, 154); and
a plurality of pipes (64, 66, 68, 164, 166, 168, 169), each pipe extending upwards from a respective outlet (57, 157) to an associated medium inlet valve (18.1, 20.1, 22.1) of one of the pressure exchange chambers and the pipes (64, 66, 68, 164, 166, 168, 169) are spaced around the central axis (98) of the manifold (52, 152, 252) and each pipe (64, 66, 68, 164, 166, 168, 169) is inclined at an angle in the range of approximately 20 degrees to 80 degrees relative thereto, the medium inlet valves (18.1, 20.1, 22.1) being in an upright orientation, whereby on closure of a medium inlet valve (18.1, 20.1, 22.1), solid particles settle down the associated pipe (64, 66, 68, 164, 166, 168, 169) under gravity and away from the medium inlet valve (18.1, 20.1, 22.1) to prevent blockage thereof.

2. The distribution manifold of claim 1, in which the body (54, 154) includes a base (56) and a top (58) which is secured to the base (56) to define the distribution chamber (55, 155), the inlet (62) extending through the base (56) and the outlets (57, 157) extending through the top (58).

3. The distribution manifold of claim 1 or 2, in which each pipe (64, 66, 68, 164, 166, 168, 169) has a coupling formation (92) at its upstream end whereby it is connectable to an associated medium inlet valve (18.1, 20.1, 22.1).

4. The distribution manifold of claim 1 or 2, in which the pipes (64, 66, 68, 164, 166, 168, 169) are equiangularly spaced around the central axis (98) of the manifold (52, 152, 252).

5. The distribution manifold of claim 4, in which the angle of inclination is in the range of approximately 40 degrees to 50 degrees.

6. The distribution manifold of any one of claims 2 to 5, which includes an inlet pipe (90) having a downstream end which is connected to the base (56) and an upstream end which is connectable to the medium supply to connect the inlet (62) of the distribution manifold (52, 152, 252) in flow communication with the medium supply.

7. The distribution manifold of claim 6, in which a connecting formation is provided at the upstream end of the inlet pipe (90) for connection with a feed line (35, 36, 37) in flow communication with a discharge side of a feeder pump.

8. A common medium input device comprising a distribution manifold (52, 152, 252) according to any preceding claim, and a plurality of medium input valves (18.1, 20.1, 22.1); wherein each of the pipes (64, 66, 68, 164, 166, 168, 169) has an upstream end which is connected to one of the outlets (57, 157) and a downstream end which is connectable to an associated medium inlet valve (18.1, 20.1, 22.1), each pipe (64, 66, 68, 164, 166, 168, 169) being inclined operatively upwardly away from the body (54, 154) such that, in use, the upstream end is positioned at a level which is lower than the downstream end.

9. A method of operating a pressure exchange chamber pumping system (10, 50) having at least one pressure exchange chamber (11.1, 11.2, 11.3) which includes feeding medium comprising solid particles transported in a liquid to an upright medium inlet valve (18.1, 20.1, 22.1) of the pressure exchange chamber (11.1, 11.2, 11.3) along a flow path through a manifold body (54, 154) and a pipe (64, 66, 68, 164, 166, 168, 169) having an upstream end connected to the manifold body (54, 154) and a downstream end connected to the medium inlet valve (18.1, 20.1, 22.1) and positioned higher than the upstream end, such that on closure of a medium inlet valve (18.1, 20.1, 22.1), solid particles settle down the associated pipe (64, 66, 68, 164, 166, 168, 169) under gravity and away from the medium inlet valve (18.1, 20.1, 22.1) to prevent blockage thereof.

10. The method of claim 9, which, when pressure exchange chamber pumping system (10, 50) comprises a plurality of pressure exchange chambers (11.1, 11.2, 11.3), includes feeding medium from a distribution chamber (55, 155) to a medium inlet valve (18.1, 20.1, 22.1) of the or each pressure exchange chamber (11.1, 11.2, 11.3) along an inclined flow path such that solids settling in a flow path are fed under gravity towards the distribution chamber (55, 155).

11. The method of claim 10, which includes feeding medium to be pumped from a delivery pump into the distribution chamber (55, 155) and from the distribution chamber (55, 155) along the associated flow path to the or each medium inlet valve (18.1, 20.1, 22.1) which is open and feeding at least some of the solids which settle in a flow path connected to a medium inlet valve (18.1, 20.1, 22.1) which is closed back into the distribution chamber (55, 155) to be entrained in medium flowing through the distribution chamber (55, 155) and along a flow path to an open medium inlet valve (18.1, 20.1, 22.1).

12. A pressure exchange chamber pumping system (10, 50) comprising:
(i) at least one pressure exchange chamber (11.1, 11.2, 11.3);
(ii) a feed arrangement (26) for feeding medium comprising solid particles transported in a liquid to the pressure exchange chamber (11.1, 11.2, 11.3); and
(iii) a common medium input device according to claim 8 coupled to both the at least one pressure exchange chamber (11.1, 11.2, 11.3) and the feed arrangement (26).

13. The pressure exchange chamber pumping system of claim 12, which includes a plurality of pressure exchange chambers (11.1, 11.2, 11.3) arranged in parallel.

## Patentansprüche

1. Verteiler (52, 152, 252) für ein Druckaustauschkammer-Pumpsystem (10, 50) mit einer Vielzahl von parallel angeordneten Druckaustauschkammern (11.1, 11.2, 11.3), umfassend:
einen hohlen Verteilerkörper (54, 154), der eine Verteilerkammer (55, 155) definiert und in einer aufrechten Ausrichtung positioniert ist und eine zentrale, aufrechte Achse (98) definiert;
einen in den Körper (54, 154) führenden Einlass (62) zur Aufnahme des zu pumpenden Mediums, das in einer Flüssigkeit transportierte Feststoffteilchen umfasst;
eine Vielzahl von beabstandeten Auslässen (57, 157), die sich betriebsmäßig nach oben aus dem Verteilerkörper (54, 154) heraus öffnen; und
eine Vielzahl von Rohren (64, 66, 68, 164, 166, 168, 169), wobei sich jedes Rohr von einem jeweiligen Auslass (57, 157) nach oben zu einem zugehörigen Mediumeinlassventil (18.1, 20.1, 22.1) einer der Druckaustauschkammern erstreckt und die Rohre (64, 66, 68, 164, 166, 168, 169) um die Mittelachse (98) des Verteilers (52, 152, 252) herum beabstandet sind und jedes Rohr (64, 66, 68, 164, 166, 168, 169) in einem Winkel im Bereich von etwa 20 Grad bis 80 Grad relativ dazu geneigt ist, wobei die Mediumeinlassventile (18.1, 20.1, 22.1) aufrecht ausgerichtet sind, sodass sich beim Schließen eines Mediumeinlassventils (18.1, 20.1, 22.1) Feststoffteilchen aufgrund der Schwerkraft in der zugehörigen Leitung (64, 66, 68, 164, 166, 168, 169) absetzen und von dem Mediumeinlassventil (18.1, 20.1, 22.1) wegbewegen, um dessen Verstopfung zu verhindern.

2. Verteiler nach Anspruch 1, wobei der Körper (54, 154) eine Basis (56) und eine Oberseite (58) beinhaltet, die an der Basis (56) befestigt ist, um die Verteilerkammer (55, 155) zu definieren, wobei sich der Einlass (62) durch die Basis (56) und die Auslässe (57, 157) durch die Oberseite (58) erstreckt.

3. Verteiler nach Anspruch 1 oder 2, wobei jedes Rohr (64, 66, 68, 164, 166, 168, 169) an seinem stromaufwärts gelegenen Ende eine Kopplungsausbildung (92) aufweist, über die es mit einem zugehörigen Mediumeinlassventil (18.1, 20.1, 22.1) verbunden werden kann.

4. Verteiler nach Anspruch 1 oder 2, wobei die Rohre (64, 66, 68, 164, 166, 168, 169) in gleichem Winkelabstand um die Mittelachse (98) des Verteilers (52, 152, 252) beabstandet sind.

5. Verteiler nach Anspruch 4, wobei der Neigungswinkel im Bereich von etwa 40 Grad bis 50 Grad liegt.

6. Verteiler nach einem der Ansprüche 2 bis 5, der ein Einlassrohr (90) beinhaltet, dessen stromabwärts gelegenes Ende mit der Basis (56) verbunden ist und dessen stromaufwärts gelegenes Ende an die Medienversorgung angeschlossen werden kann, um den Einlass (62) des Verteilers (52, 152, 252) mit der Medienversorgung in Strömungsverbindung zu bringen.

7. Verteiler nach Anspruch 6, wobei am stromaufwärts gelegenen Ende des Einlassrohrs (90) eine Verbindungsausbildung vorgesehen ist, um mit einer Zuleitung (35, 36, 37) verbunden zu werden, die in Strömungsverbindung mit einer Auslassseite einer Zufuhrpumpe steht.

8. Gemeinsame Medieneingabevorrichtung, umfassend einen Verteiler (52, 152, 252) nach einem der vorhergehenden Ansprüche und eine Vielzahl von Mediumeingabeventilen (18.1, 20.1, 22.1); wobei jedes der Rohre (64, 66, 68, 164, 166, 168, 169) ein stromaufwärts gelegenes Ende aufweist, das mit einem der Auslässe (57, 157) verbunden ist, und ein stromabwärts gelegenes Ende, das mit einem zugehörigen Mediumeinlassventil (18.1, 20.1, 22.1) verbunden werden kann, wobei jedes Rohr (64, 66, 68, 164, 166, 168, 169) betriebsmäßig von dem Körper (54, 154) weg nach oben geneigt ist, sodass das stromaufwärts gelegene Ende im Gebrauch auf einem niedrigeren Niveau positioniert ist als das stromabwärts gelegene Ende.

9. Verfahren zum Betreiben eines Druckaustauschkammer-Pumpsystems (10, 50) mit zumindest einer Druckaustauschkammer (11.1, 11.2, 11.3), das die Zufuhr eines Mediums beinhaltet, das Feststoffteilchen umfasst, die in einer Flüssigkeit zu einem aufrechten Mediumeinlassventil (18.1, 20.1, 22.1) der Druckaustauschkammer (11.1, 11.2, 11.3) entlang eines Strömungswegs durch einen Verteilerkörper (54, 154) transportiert werden und einem Rohr (64, 66, 68, 164, 166, 168, 169), dessen stromaufwärts gelegenes Ende mit dem Verteilerkörper (54, 154) verbunden ist und dessen stromabwärts gelegenes Ende mit dem Mediumeinlassventil (18.1, 20.1, 22.1) verbunden und höher als das stromaufwärts gelegene Ende positioniert ist, sodass sich beim Schließen eines Mediumeinlassventils (18.1, 20.1, 22.1) Feststoffteilchen durch die Schwerkraft in dem zugehörigen Rohr (64, 66, 68, 164, 166, 168, 169) absetzen, und zwar weg von dem Mediumeinlassventil (18.1, 20.1, 22.1), um dessen Verstopfung zu verhindern.

10. Verfahren nach Anspruch 9, das, wenn das Druckaustauschkammer-Pumpsystem (10, 50) eine Vielzahl von Druckaustauschkammern (11.1, 11.2, 11.3) umfasst, das Zuführen von Medium von einer Verteilerkammer (55, 155) zu einem Mediumeinlassventil (18.1, 20.1, 22.1) der oder jeder Druckaustauschkammer (11.1, 11.2, 11.3) entlang eines geneigten Strömungswegs beinhaltet, sodass sich in einem Strömungsweg absetzende Feststoffe unter Schwerkraft zur Verteilerkammer (55, 155) zugeführt werden.

11. Verfahren nach Anspruch 10, das das Zuführen von zu pumpendem Medium von einer Förderpumpe in die Verteilerkammer (55, 155) und von der Verteilerkammer (55, 155) entlang des zugehörigen Strömungswegs zu dem oder jedem Mediumeinlassventil (18.1, 20.1, 22.1) beinhaltet, das offen ist und zumindest einen Teil der Feststoffe, die sich in einem mit einem geschlossenen Mediumeinlassventil (18.1, 20.1, 22.1) verbundenen Strömungsweg absetzen, zurück in die Verteilerkammer (55, 155) zuführt, um in dem durch die Verteilerkammer (55, 155) und entlang eines Strömungswegs zu einem offenen Mediumeinlassventil (18.1, 20.1, 22.1) strömenden Medium mitgerissen zu werden.

12. Druckaustauschkammer-Pumpsystem (10, 50), umfassend:
(i) zumindest eine Druckaustauschkammer (11.1, 11.2, 11.3);
(ii) eine Zuführanordnung (26) zum Zuführen eines Mediums, das in einer Flüssigkeit transportierte Feststoffteilchen umfasst, in die Druckaustauschkammer (11.1, 11.2, 11.3); und
(iii)eine gemeinsame Medieneingabevorrichtung nach Anspruch 8, die sowohl mit der zumindest einen Druckaustauschkammer (11.1, 11.2, 11.3) als auch mit der Zufuhranordnung (26) gekoppelt ist.

13. Druckaustauschkammer-Pumpsystem nach Anspruch 12, das eine Vielzahl von parallel angeordneten Druckaustauschkammern (11.1, 11.2, 11.3) beinhaltet.

## Revendications

1. Collecteur de distribution (52, 152, 252) pour un système de pompage de chambre d'échange de pression (10, 50) ayant une pluralité de chambres d'échange de pression (11.1, 11.2, 11.3) agencées en parallèle, qui comprend :
un corps de collecteur creux (54, 154) définissant une chambre de distribution (55, 155) et positionné dans une orientation verticale et définissant un axe vertical central (98) ;
une admission (62) menant dans le corps (54, 154) pour recevoir le fluide à pomper, comprenant des particules solides transportées dans un liquide ;
une pluralité de sorties (57, 157) espacées s'ouvrant de manière fonctionnelle vers le haut hors du corps de collecteur (54, 154) ; et
une pluralité de tuyaux (64, 66, 68, 164, 166, 168, 169), chaque tuyau s'étendant vers le haut à partir d'une sortie (57, 157) respective vers une soupape d'admission de fluide (18.1, 20.1, 22.1) associée d'une des chambres d'échange de pression et des tuyaux (64, 66, 68, 164, 166, 168, 169) sont espacés autour de l'axe central (98) du collecteur (52, 152, 252) et chaque tuyau (64, 66, 68, 164, 166, 168, 169) est incliné selon un angle dans la plage d'approximativement 20 degrés à 80 degrés par rapport à celui-ci, les soupapes d'admission de fluide (18.1, 20.1, 22.1) étant dans une orientation verticale, moyennant quoi, à la fermeture d'une soupape d'admission de fluide (18.1, 20.1, 22.1), des particules solides se déposent dans le tuyau (64, 66, 68, 164, 166, 168, 169) associé par gravité et à distance de la soupape d'admission de fluide (18.1, 20.1, 22.1) pour empêcher le blocage celle-ci.

2. Collecteur de distribution selon la revendication 1, dans lequel le corps (54, 154) comprend une base (56) et un sommet (58) qui est arrimé à la base (56) pour définir la chambre de distribution (55, 155), l'admission (62) s'étendant à travers la base (56) et les sorties (57, 157) s'étendant à travers le sommet (58) .

3. Collecteur de distribution selon la revendication 1 ou 2, dans lequel chaque tuyau (64, 66, 68, 164, 166, 168, 169) a une formation de couplage (92) au niveau de son extrémité amont, moyennant quoi il peut être raccordé à une soupape d'admission de fluide (18.1, 20.1, 22.1) associée.

4. Collecteur de distribution selon la revendication 1 ou 2, dans lequel les tuyaux (64, 66, 68, 164, 166, 168, 169) sont espacés de manière équiangulaire autour de l'axe central (98) du collecteur (52, 152, 252).

5. Collecteur de distribution selon la revendication 4, dans lequel l'angle d'inclinaison est dans la plage d'approximativement 40 degrés à 50 degrés.

6. Collecteur de distribution selon l'une quelconque des revendications 2 à 5, qui comprend un tuyau d'admission (90) ayant une extrémité aval qui est raccordée à la base (56) et une extrémité amont qui peut être raccordée à l'apport en fluide pour raccorder l'admission (62) du collecteur de distribution (52, 152, 252) en communication d'écoulement avec l'alimentation en fluide.

7. Collecteur de distribution selon la revendication 6, dans lequel une formation de raccordement est prévue à l'extrémité amont du tuyau d'admission (90) pour un raccordement avec une ligne d'alimentation (35, 36, 37) en communication d'écoulement avec un côté d'évacuation d'une pompe d'alimentation.

8. Dispositif d'admission de fluide commun comprenant un collecteur de distribution (52, 152, 252) selon l'une quelconque des revendications précédentes, et une pluralité de soupapes d'admission de fluide (18.1, 20.1, 22.1) ; dans lequel chacun des tuyaux (64, 66, 68, 164, 166, 168, 169) a une extrémité amont qui est raccordée à l'une des sorties (57, 157) et une extrémité aval qui peut être raccordée à une soupape d'admission de fluide (18.1, 20.1, 22.1) associée, chaque tuyau (64, 66, 68, 164, 166, 168, 169) étant incliné fonctionnellement vers le haut à l'écart du corps (54, 154) de telle sorte que, en utilisation, l'extrémité amont est positionnée à un niveau qui est plus bas que l'extrémité aval.

9. Procédé de fonctionnement d'un système de pompage à chambre d'échange de pression (10, 50) ayant au moins une chambre d'échange de pression (11.1, 11.2, 11.3) qui comprend l'alimentation en fluide comprenant des particules solides transportées dans un liquide vers une soupape d'admission de fluide verticale (18.1, 20.1, 22.1) de la chambre d'échange de pression (11.1, 11.2, 11.3) le long d'un trajet d'écoulement à travers un corps de collecteur (54, 154) et un tuyau (64, 66, 68, 164, 166, 168, 169) ayant une extrémité amont raccordée au corps de collecteur (54, 154) et une extrémité aval raccordée à la soupape d'admission de fluide (18.1, 20.1, 22.1) et positionné plus haut que l'extrémité amont, de sorte que lors de la fermeture d'une soupape d'admission de fluide (18.1, 20.1, 22.1), des particules solides se déposent dans le tuyau (64, 66, 68, 164, 166, 168, 169) associé par gravité et à distance de la soupape d'admission de fluide (18.1, 20.1, 22.1) pour empêcher son blocage.

10. Procédé selon la revendication 9, qui, lorsque le système de pompage de chambre d'échange de pression (10, 50) comprend une pluralité de chambres d'échange de pression (11.1, 11.2, 11.3), comprend l'alimentation en fluide depuis une chambre de distribution (55, 155) jusqu'à une soupape d'admission de fluide (18.1, 20.1, 22.1) de la ou de chaque chambre d'échange de pression (11.1, 11.2, 11.3) le long d'un trajet d'écoulement incliné, de telle sorte que les solides qui se déposent dans un trajet d'écoulement sont alimentés par gravité vers la chambre d'écoulement (55, 155).

11. Procédé selon la revendication 10, qui comprend l'alimentation en fluide à pomper depuis une pompe de circulation dans la chambre de distribution (55, 155) et depuis la chambre de distribution (55, 155) le long du trajet d'écoulement associé vers la ou chaque soupape d'admission de fluide (18.1, 20.1, 22.1) qui est ouverte et qui alimente l'au moins une partie des solides qui se déposent dans un trajet d'écoulement raccordé à une soupape d'admission de fluide (18.1, 20.1, 22.1) qui est fermée en retour dans la chambre de distribution (55, 155) à entraîner dans le fluide s'écoulant à travers la chambre de distribution (55, 155) et le long d'un trajet d'écoulement vers une soupape d'admission de fluide (18.1, 20.1, 22.1) ouverte.

12. Système de pompage de chambre d'échange de pression (10, 50) comprenant :
(i) l'au moins une chambre d'échange de pression (11.1, 11.2, 11.3) ;
(ii) un agencement d'alimentation (26) pour alimenter un fluide comprenant des particules solides transportées dans un liquide vers la chambre d'échange de pression (11.1, 11.2, 11.3) ; et
(iii) un dispositif d'admission de fluide commun selon la revendication 8 couplé à la fois à l'au moins une chambre d'échange de pression (11.1, 11.2, 11.3) et à l'agencement d'alimentation (26).

13. Système de pompage de chambre d'échange de pression selon la revendication 12, qui comprend une pluralité de chambres d'échange de pression (11.1, 11.2, 11.3) agencées en parallèle.
